# EUROPEAN PATENT APPLICATION

(11) **EP 3 544 099 A1**
(43) Date of publication of application: **25.09.2019**
(21) Application number: 18163146.6
(22) Date of filing: 21.03.2018
(51) Int. Cl.: H01M 4/62, H01M 10/0525

(54) **DISPERSANT AND BINDER FOR LITHIUM ION BATTERIES BASED ON MODIFIED LIGNIN AND CARBOXYMETHYL CELLULOSE**

(71) Applicant: Borregaard AS, 1721 Sarpsborg (NO)
(72) Inventor: The designation of the inventor has not yet been filed
(74) Representative: Tostmann, Holger Carl

(57) **Abstract**

The present application relates to a composition for electrochemical cells, wherein the composition comprises modified lignin and carboxymethyl cellulose. Preferably, said composition is a binder composition The present application also relates to a negative electrode for an electrochemical cell, comprising said composition, as well as a method for producing said negative electrode,. The present invention also relates to the use of said composition as a binder in a negative electrode, respectively as a dispersant used during the manufacturing thereof.

## Description

### FIELD OF THE INVENTION

The present application relates to a composition for electrochemical cells, wherein the composition comprises modified lignin and carboxymethyl cellulose. Preferably, said composition is a binder composition The present application also relates to a negative electrode for an electrochemical cell, comprising said composition, as well as a method for producing said negative electrode,. The present invention also relates to the use of said composition as a binder in a negative electrode, respectively as a dispersant used during the manufacturing thereof.

### BACKGROUND OF THE INVENTION

In modern lithium ion batteries, electrode materials are used that provide high capacity in combination with low weight. In particular, negative electrodes based on silicon as an electrode material for such state-of-the-art lithium ion batteries can have ten times higher capacity to store lithium as an intermetallic compound, compared to conventional intercalation negative electrode materials, such as carbon (e.g. graphite), where lithium is intercalated in a carbon network wherein the maximum ratio is one lithium ion to six carbon atoms.

While silicon is advantageous over carbon in terms of capacity, a significant disadvantage of silicon-based anode material is that in the charging step, in which lithium ions react with the silicon to form lithium silicate compounds, the electrode material undergoes a drastic volume increase, which can cause irreversible capacity loss and disrupt the structure of the negative electrode. Upon discharge, this volume increase is (partially) reversed. For maximum lithiation of silicon to Li₂₂Si₅, the volume change of the electrode material may be as much as 320%. This puts a significant functional demand on the binder contained in the electrode material that generally cannot be met by conventional lithium ion electrode binders like polyvinylidene fluoride (PVDF).

Generally, polyvinylidene fluoride (PVDF) polymer binders are believed to have limited elasticity and are not suitably adaptable to accommodate large volume changes of active materials.

A wide range of alternatives to PVDF have been suggested and studied, e.g., Nafion, polyimide, polyacrylic acid, lithiated polyacrylic acid, carboxymethyl cellulose (CMC), hydroxypropyl cellulose, polyacrylic acid and CMC. It was shown that, for example, polyacrylic acids cross-linked to varying degrees may be a more suitable binder than PVDF.

*Tranchot et al.* have reviewed the role of the binder for lithium silicon electrodes in regard to maintaining electrode integrity, noting that, while CMC is not an elastomeric binder, CMC may improve cycling. This improvement was attributed to extended conformation in solution that facilitates network formation (Tranchot et al. (2016). J. Electrochem. Soc., 163(6), A1020-A1026).

In WO 2016/144232, the use of Kraft-pulp based lignin, alone and in combination with polyethylene glycol (PEG) polymers, as the binder for both a graphite anode and LiFePO₄ cathode is disclosed. It was also suggested that Kraft lignins can be further treated by diethylene carbonate (DEC) extraction to remove the smaller molecular fractions, leaving the larger, DEC-insoluble Kraft lignin fragments for testing as the binder.

In order to minimize the volume changes of the electrode material, one approach is to use finely divided silicon nanoparticles (on the order of 100 to 200 nm average particle size), requiring careful management of the electrode material slurry to maintain a stable dispersion.

CN106025283 discloses a lithium ion battery binder comprising lignosulfonate and styrene butadiene rubber (SBR), in a ratio of 100 parts water soluble lignin and 20 to 1000 parts SBR, for a silicon/carbon composite electrode material having improved discharge performance over CMC/SBR binder.

In order to accommodate emerging, high energy lithium ion battery chemistry, the above mentioned binder and dispersion issues need to be addressed in a manner not detrimental to other performance characteristics of the battery.

### OBJECTS OF THE INVENTION

It is therefore an object of the present application to provide a composition for lithium ion batteries suitable to be used in negative electrodes, in particular such negative electrode materials that undergo volume changes during charging and discharging.

### SUMMARY OF THE INVENTION

In a first aspect, the present invention relates to a composition for an electrochemical cell, in particular for a negative electrode of an electrochemical cell, wherein said composition comprises at least one water soluble lignin and said composition further comprising carboxymethyl cellulose.

In a second aspect, the present invention relates to a negative electrode for an electrochemical cell, comprising a negative electrode material, wherein the negative electrode material comprises at least one electrochemically active material, said negative electrode further comprising the composition according to the first aspect.

In a third aspect, the present invention relates to a method for producing a negative electrode for an electrochemical cell, said comprising the step of mixing the composition according to the first aspect with at least one electrode active material.

In a fourth aspect, the present invention relates to an electrochemical cell comprising the negative electrode according to the second aspect.

In a fifth aspect, the present invention relates to a battery, preferably a lithium ion battery, comprising at least one electrochemical cell, preferably a plurality of electrochemical cells according to the third aspect.

In a sixth aspect, the present invention relates to the use of the composition according to the first aspect as a binder in the negative electrode of an electrochemical cell.

In a seventh aspect, the present invention relates to the use of the composition according to the first aspect as a dispersant, used during the manufacture of an electrochemical cell, in particular during the manufacture of the negative electrode of a lithium ion battery.

### DETAILED DESCRIPTION OF THE INVENTION

The objective underlying the present application is solved by a composition for an electrochemical cell, in particular for a negative electrode of an electrochemical cell, said composition comprising or consisting of at least one chemically modified lignin, together with at least one carboxymethyl cellulose.

The chemically modified lignin is a water soluble lignin and can for instance be a sulfonated lignin, a carboxylated lignin, a hydrolysed carboxylated lignin, or an amine functionalized lignin.

The composition according to the invention has the advantage that it may be suitably used as a dispersant in the preparation of a negative electrode and/or as binder in the negative electrode material of a negative electrode in an electrochemical cell. The composition effectively acts as binder adhering the negative electrode material to the current collector present in the negative electrode and also adhering the components present in the negative electrode together, in particular all the while the negative electrode material is subjected to volume changes during charging and discharging cycles of the electrochemical cell.

Without wishing to be bound by theory, it is believed that the electrochemical cell comprising a negative electrode comprising the composition according to the invention has a higher charge and/or discharge capacity compared to electrochemical cells which does not contain the composition according to the invention in the negative electrode.

Another advantage of the present invention is that combinations of a water soluble lignin and carboxymethyl cellulose are compatible with aqueous solutions, so that electrode slurry preparation can be carried out without the use of organic solvent.

A further advantage of the present composition is that the water-soluble lignin and the carboxymethyl cellulose comprised in the composition according to the invention are readily available and are environmental friendly in terms of production and also in terms of disposal.

Still another advantage of the composition according to the invention is that the composition according to the invention can also be used during the manufacturing of the negative electrode material for the negative electrode, namely as a dispersant, facilitating the dispersion of the electrochemically active material in the slurry and thus stabilizing the slurry which is then applied to current collector in order to form the negative electrode. In other words, the composition according to the first aspect not only leads to an advantageous binder material in a negative electrode, but also improves the method of manufacturing said electrode.

In accordance with the present application, the term "lignin" relates to a biopolymer, respectively a mixture of biopolymers, that is/are present in the support tissues of plants, in particular, in the cells walls providing rigidity to the plants. Lignin is a phenolic polymer, respectively a mixture of a phenolic polymer. The composition of lignin depends on the plant and therefore varies depending on the plant it is derived from. Lignin in its native form, i.e. as present in the plant, is hydrophobic and aromatic.

In accordance with the present application, no restrictions exist in regards to the source of the lignin.

In accordance with the present application, the term "chemically modified lignin" is to be understood to relate to any lignin that is no longer present in its native form, but has been subjected to a chemical process. Processes for making chemically modified lignin are commonly known in the art.

The chemically modified lignin in accordance with the present invention is water soluble and preferably a sulfonated lignin. One preferred example of a sulfonated lignin is lignosulfonate. Lignosulfonate is obtained when lignin, respectively lignin-containing cellulosic biomass is subjected to sulfite cooking. Thus, lignosulfonate is the organic salt product recovered from digestion of wood (typically acid sulfite pulping with sulfurous acid). Preferred lignosulfonates can thus be described as water-soluble anionic polyelectrolyte polymers.

The term "lignosulfonate" as used within the context of the present application refers to any lignin derivative, which is formed during sulfite pulping of lignin-containing material, such as, e.g., wood, in the presence of, for example, sulfur dioxide and sulfite ions, respectively bisulfite ions.

For example, during the acidic sulfite pulping of lignin-based material, electrophilic carbon cations in the lignin are produced, which are a result of the acid catalyzed ether cleavage. Thus, lignin may react, via these carbo-cations, with the sulfite, respectively bisulfite ions under the formation of lignosulfonate.

Another example of a chemically modified lignin is "Kraft" lignin. Kraft lignin are precipitated from Kraft alkaline pulping liquors, in particular from Kraft process pulp making during which the lignin has been broken down from its native form present in the wood pulp, representing molecular fractions of the original biopolymer. Kraft lignin can therefore be described as precipitated, unsulfonated alkaline lignin. Kraft lignin differ structurally and chemically from lignosulfonate e.g. in that that Kraft lignin is not water soluble.

Kraft lignin can be further modified. The term "sulfonated lignin" as used within the context of the present application is to be understood as a lignin derivative, in which sulfonic acid groups have been introduced. Thus, sulfonated lignin is characterized by the presence of -SO₃⁻M⁺ groups, wherein M is a cation balancing the anionic charge of the -SO₃⁻ moiety and which is selected from alkali metal cation, in particular from Li⁺, Na⁺, or K⁺, Ca⁺⁺, or Mg⁺⁺, or ammonium cation NH₄⁺, or mixtures thereof.

In one embodiment of the invention, the water soluble lignin is sulfonated lignin obtained from Kraft lignin. In embodiments, sulfonated lignin may be obtained when Kraft lignin is treated with alkali sulfite and alkylaldehyde at elevated temperature and pressure.

In embodiments, sulfonated lignin is a lignosulfonate obtained by modifying a lignosulfonate for instance by subjecting it to ion exchange, preferably by reacting it with sodium sulfate.

The presence of water soluble lignin in the composition according to the invention is associated with the advantage, among others, that the composition according to the invention acts as dispersant during the manufacturing of the negative electrode.

Without wishing to be bound by theory, water soluble lignin, in particular sulfonated lignin and lignosulfonate, are believed to enhance the dispersion capability of carboxymethyl cellulose when added to the slurry of the negative electrode material, by forming an hydrating shell in the aqueous slurry around the particular components of the slurry like the electrochemically active material, and /or the conduction additive. Due to the presence of polar as well as non-polar functional groups and by way of providing carboxyl groups present in the water soluble lignin, such as in lignosulfonate and sulfonated lignin, said hydrating shell may be formed around particulate components, and thus particular components can be dispersed in a stable aqueous slurry.

Further, it is believed that the presence of water soluble lignin, preferably of lignosulfonate or sulfonated lignin in the composition according to the invention has the advantage that the composition according to the invention acts as binder in the negative electrode material of a negative electrode.

As already discussed, water soluble lignin such as, in particular, lignosulfonate or sulfonated lignin, contains polar and non-polar groups which are believed to be particularly suitable to interact via intermolecular interactions with the components of the negative electrode material, such as the electrochemically active material or the conduction additive and thus adheres these components to each other. Thus, volume changes of the negative electrode material during charge and discharge cycles of the electrochemical cell may effectively be accommodated.

In accordance with the present application, the term "carboxymethyl cellulose" is understood to relate to a cellulose ether. Parts or all of the hydroxy groups present in the cellulose are derivatized via ether bonds by carboxymethyl ether groups (-CH₂CO₂H). The term carboxymethyl cellulose is usually abbreviated as "CMC".

Carboxymethyl cellulose is produced in accordance with commonly known methods. In particular, cellulose is treated with sodium hydroxide to obtain alkali cellulose as reactive intermediate. The alkali cellulose is then alkylated by using chloroacetic acid.

Carboxymethyl cellulose has the advantage to act as thickening agent in a slurry of a negative electrode material by increasing the viscosity of the slurry. It is advantageous that the slurry of the negative electrode material has a defined viscosity when the slurry is coated on the current collector. It is believed that the modified lignin as also present stabilizes viscosity.

Another advantage of the presence of carboxymethyl cellulose is that it acts as binder when the electrochemically active material present in the negative electrode material is silicon based, and thus the mechanical strength of the negative electrode material is increased.

In embodiments of the invention, the amount of water soluble lignin in the composition is from 5 to 95% weight by weight, preferably from 10 to 90 % w/w, further preferably from 20% to 80 % w/w, even further preferably from 30% to 70 % w/w, wherein the % w/w is based the overall dry weight of the composition. In embodiments of the invention, the amount of CMC in the composition is from 5 to 95% weight by weight, preferably from 10 to 90% w/w, further preferably from 20% to 80% w/w, even further preferably from 30% to 70% w/w, wherein the % w/w is based the overall dry weight of the composition.

The composition according to the invention may comprise at least one further component which is selected from at least one water soluble polymer or at least one water dispersible polymer, or mixtures thereof. Preferred examples of such polymers are phenolic resins, polyimide resins, amino resins, polyacrylic acid resins, polyacrylate resins, polyethylene glycol resins, sodium alginate, sodium pectate or a mixture thereof.

In embodiments of the invention, the composition comprises at least one solvent. In preferred embodiments, said solvent comprises, preferably consists of water.

The term "electrochemical cell" as used within the context of the present application is to be understood as relating to any device capable of electrical storing of energy.

The term "electrochemical cell" suitably encompasses electrochemical cells of a primary type, secondary type and also other kinds of energy storage devices such as capacitors.

Preferably, the electrochemical cell according to the invention comprises at least one negative electrode, at least one positive electrode and at least one separator which is located between the at least one positive electrode and the at least one negative electrode and thus separating the electrodes from each other.

In embodiments, the electrochemical cell is be designed as full cell (i.e. the electrochemically active material present in the positive electrode is different from lithium, e.g. lithium nickel cobalt manganese oxide) or as half cell (i.e. the electrochemically active material present in the positive electrode is lithium metal). Furthermore, the electrodes and the separator are at least partially, preferably completely embedded in a surrounding case.

Furthermore, the term "electrochemical cell" also includes the respective battery, since batteries in general consist of serially connected electrochemical cells. Consequently, a battery contains at least one electrochemical cell. The terms "battery" and "accumulator" can be used interchangeably within the context of the present application.

In a preferred embodiment, the battery according to the invention is a lithium ion battery, preferably a lithium ion battery comprising a silicone anode.

The term "negative electrode" within the context of the present application is to be understood as relating to any electrode donating electrons when being connected to a load. Hence, the term negative electrode can be used interchangeably with anode.

The negative electrode comprises at least a negative electrode material and at least a current collector.

At least 0.1% by weight, or at least 1% by weight, or at least 2% by weight, or at least 3% by weight, or at least 4% by weight, or at least 5% by weight and at most 10% by weight, or at most 12% by weight, or at most 15% by weight, or at most 17% by weight, or at most 20% by weight of carboxymethyl cellulose is present in the negative electrode material, wherein the % by weight is based on the total weight of the negative electrode material. Preferably at least 0.1 to 20% by weight, or 1 to 15% by weight, or 3 to 12% by weight of carboxymethyl cellulose is present in the negative electrode material, wherein the % by weight is based on the total weight of the negative electrode material.

At least 0.1% by weight, or at least 1% by weight, or at least 2% by weight, or at least 3% by weight, or at least 4% by weight, or at least 5% by weight and at most 10% by weight, or at most 12% by weight, or at most 15% by weight, or at most 17% by weight, or at most 20% by weight of water soluble lignin is present in the negative electrode material, wherein the % by weight is based on the total weight of the negative electrode material. Preferably at least 0.1 to 20% by weight, or 1 to 15% by weight, or 3 to 12% by weight of water soluble lignin is present in the negative electrode material, wherein the % by weight is based on the total weight of the negative electrode material.

In embodiments of the invention, the negative electrode material comprises or consists of at least one silicon based electrochemically active material or silicon/carbon composite based electrochemically active material or a mixture thereof.

In the silicon based electrochemically active material, silicon may be present alone or in combination with other suitable electrochemically active materials, such as carbon in various forms or lithium titanate.

In embodiments of the invention, the electrochemically active material of the electrode is selected from silicon or a silicon-carbon composite, either separately, or combined with other negative active materials such as lithium titanate or other forms of electrochemically active carbon, or aluminium, tin, antimony, magnesium, as well as mixtures of one or more of these compounds, also in the form of composites with carbon.

In embodiments, silicon based electrochemically active material may be provided as nanowires or nanoparticles or a mixture thereof. The term "nanowire" means that the transversal diameter of the nanowire is in the range of 1 to 200 nm, while the longitudinal diameter is at least twice, preferably triple, preferably fivefold, preferably twenty-fold, preferably a multitude of the transversal diameter. The term "nanoparticle" means that the average particle diameter is between 1 and 200 nm.

In the silicon-carbon based electrochemically active material, the silicon alone or in combination with other electrochemically active metals such as lithium may be embedded in a carbon matrix.

The negative electrode material may comprise at least one further additive.

One preferred additive is suitable to increase the conductivity. Such an additive is preferably carbon based, for example carbon black.

The current collector present in the negative electrode is at least partially coated with the negative electrode material.

The negative electrode according to the invention can be produced according to commonly known methods. In particular, the method for producing the negative electrode according to the invention comprises the step of mixing the composition according to the invention with at least one electrochemically active material thus yielding a slurry of the negative electrode material which can then be coated onto the current collector.

The term "slurry" as used within the context of the present application refers to a mixture of solid components e.g. electrochemically active material, conduction additive, carboxymethyl cellulose, water soluble lignin, further components present in the negative electrode material or mixtures thereof, and liquid components e.g. at least one solvent.

In the mixing step, all components present in the negative electrode active material may be introduced into the mixture at the same time or at different point in times.

Preferably, at least the water soluble lignin, at least the carboxymethyl cellulose and at least the electrochemically active material and optionally further components of the negative electrode material are provided all together into a mixing device.

In a subsequent step, at least one liquid component is added to this mixture.

In embodiments, this at least one liquid component is selected from water, organic acid, liquid base, or liquid electrolyte or mixtures thereof. Preferably the at least one liquid component is water. It is also preferred to first dissolve carboxymethyl cellulose in a solution of KOH and citric acid and then add this solution as liquid component to the solid components. This has the advantage that the interaction, e.g. the chemical bonding between the composition according to the invention and the electrochemically active material is facilitated. Once the solid components and the at least one liquid component are mixed, a slurry of the negative electrode material is obtained. This slurry of the negative electrode material is preferably an aqueous slurry.

During the manufacturing of the slurry of the negative electrode material the composition according to the invention predominantly acts as dispersant.

Thus, the present application also relates to the use of the composition according to the invention as dispersant during the manufacturing of the negative electrode of an electrochemical cell.

The slurry of the negative electrode material is then coated on a current collector. Thus, the method for producing the negative electrode comprises a coating step, wherein the slurry of the negative electrode material is coated on the current collector of the negative electrode.

Further, the method for producing the negative electrode also comprises a drying step, wherein the slurry of the negative electrode material which is coated on the current collector of the electrochemical cell is dried at conditions sufficient to drive off water by heating or vacuum drying. Once the drying step is completed, the composition according to the invention acts predominantly as binder in the negative electrode material, adhering the components of the negative electrode material to each other, and adhering the negative electrode material to the current collector.

Therefore, the present application also relates to the use of the composition according to the invention as binder in the negative electrode of an electrochemical cell

The thickness, porosity and load of the electrochemically active material of the negative electrode material present on the current collector of the negative electrode can be adapted to the respective requirements, which have to be fulfilled by the electrochemical cell containing said negative electrode by commonly known methods.

The term "positive electrode" as used within the context of the present application is to be understood as relating to the electrode accepting electrons when being connected to a load, and thus the term positive electrode can be used interchangeably with cathode.

The positive electrode comprises at least a positive electrode material and at least a current collector.

Under the term "positive electrode material" as used within the context of the present application at least an electrochemically active material which is capable of intercalating and/or de-intercalating of redox components, in particular of lithium ions Li+ is to be understood.

The electrochemically active material present in the positive electrode material can be selected from any commonly known material suitable to be used as electrochemically active material in positive electrodes.

The electrochemically active material present in the positive electrode material can generally be selected from at least one or more oxides of metals, wherein the metals are selected from nickel, manganese, cobalt, aluminum, phosphorus, iron, titanium or mixtures thereof. In particular, the electrochemically active material present in the positive electrode material can also be for example selected from a compound of formula LiMPO₄ having an Olivine structure, wherein M is selected from a transition metal cation of the first row of transition metals of the periodic table of elements, and is preferably selected from manganese, iron, nickel, cobalt, or titanium or mixtures thereof. Examples for such electrochemically active materials are LiFePO₄ or LiCoPO₄, or LiNiCoAlO₂ Further, the electrochemically active material for the positive electrode material can be selected from a transition metal oxide or a transition metal mixed oxide of the Spinell-type or which are different from the Spinel-type. Examples for such electrochemically active materials are LiMn₂O₄, LiCoO₂, LiNiO₂, LiCoMnO₄, LiNi_{0.5}Mn_{1.5}O₄, LiNi_{0.33}Mn_{0.33}Co_{0.33}O₂, or LiNiCoO₂. Also lithium metal, e.g. designed as lithium foil can be used as electrochemically active material in the positive electrode material.]

The positive electrode material can further comprise at least one additive. One preferred additive can increase the conductivity. Such an additive is preferably carbon based, for example carbon black.

In accordance with the present invention, any binder may be used in addition to the binder as defined herein. This additional binder that may be present in the positive electrode and/or in the negative electrode and/or in the separator may be selected from commonly known binders and is preferably a polymer or a mixture of polymers. Examples for suitable binders are polyethyleneoxide, polyacrylate, polytetrafluoroethylene, polyethylene, polypropylene, polyimide, ethylene-(propylene-dien-monomer)-copolymer, or mixtures or copolymers thereof.

The current collector present in the positive electrode is at least partially coated with the positive electrode material.

The term "current collector" as used In accordance with the present invention is to be understood as any substrate which is at least partially coated with the electrode material of the respective electrode. In embodiments, the current collector comprises or consists of metal and is designed as foil, network or gauze. The metal is preferably selected from copper, copper-containing alloy or aluminum. The current collector can also comprise plastics.

The term "separator" as used within the context of the present application relates to a material is to be understood separating and electrically isolating the positive electrode from the negative electrode. Thus, the separator is impermeable for electrons. Otherwise, a short-circuit would occur which can damage or destroy the electrochemical cell. The separator is, however, permeable for lithium ions and thus contributes to the lithium ion exchange between the positive electrode and negative electrode during charging and/or discharging of the electrochemical cell.

In order to provide ion exchange, in particular lithium ion Li⁺ exchange between the positive and the negative electrode of the electrochemical cell, the electrochemical cell further comprises an electrolyte. It is advantageous that at least the separator is soaked with the electrolyte.

The term "electrolyte" as used In accordance with the present invention relates to any material that acts as ion conductor and therefore participates in the transport of charge carriers, in particular lithium ions Li+, from the positive electrode to the negative electrode and vice versa during charge and discharge cycles of the electrochemical cell. Any commonly known electrolyte can be used.

Generally, suitable electrolytes are non-aqueous electrolytes comprising or consisting of at least one organic solvent and at least one therein dissolved conducting salt. The at least one conducting salt is selected from alkalimetal ion containing salts, preferably a lithium-ion containing inorganic or organic salt, wherein the anion is inert and non-toxic. Examples for suitable organic solvents are ethylene carbonate (EC); dimethyl carbonate (DMC), dipropylcarbonate (DPC), butylene carbonate, propylene carbonate (PC), diethyl carbonate (DEC), ethylmethyl carbonate (EMC), ethylpropyl carbonate, methylpropyl carbonate, butylmethyl carbonate, methyl acrylate (MA), methyl formiate (MF), cyclopentanone, dimethyl sulfoxide, tetramethyl sulfone (TMS); ethylmethyl sulfone (EVS); butyl sulfone (BS), methyl butyrate (MB), ethylacetate (EA), 1,2-dimethoxyethane, methyl acetate, tetrahydrofurane (THF), 2-methyl tetrahydrofurane, 1-fluuor-2-(methylsulfonyl)benzole (FS), 1,3-propane sultone, sulfulane, 3-methyl-1,3-oxazolidin-2-one, 1,3-dioxylane, acetonitrile, γ-butyroiyctone, nitromethane, or phosphoric acid esters, or mixtures thereof. Suitable conducting salts are lithium ion containing salts comprising as anions: AsF₆⁻, PF₆⁻, PF₃(C₂F₅)₃⁻, PF₃(CF₃)₃⁻, BF₄⁻, BF₂(CF₃)₂⁻, BF₃(CF₃)⁻, [B(COOCOO)₂]⁻, [B(C₆H₅)₄]⁻, Cl⁻, Br⁻, AlCl₄⁻, CF₃SO₃⁻, C₄F₉SO₃⁻, [(SO₂CₓF₂ₓ₊₁)₃C]⁻ wherein 0≤x≤8, preferably [(CF₃SO₂)₃C]⁻, [(CF₃SO₂)₂N]⁻, [(C₂F₅SO₂)N]⁻, [(CN)₂N]⁻, ClO₄⁻, SiF₆⁻, or mixtures thereof.

Further, the present application refers to a battery, preferably a lithium ion battery comprising or consisting of a plurality of electrochemical cells, wherein the electrochemical cells comprise a negative electrode, a separator and a positive electrode, wherein further the negative electrode comprises the composition according to the invention.

The battery can be assembled by commonly known conventional methods. For example the negative electrode comprising the composition according to the invention can be paired with a lithium metal foil as positive and reference electrode and a microporous separator between both electrodes. Thus, a half cell is formed. The assembly is soaked with an appropriate liquid electrolyte, e.g. containing LiPF₆ as conductive salt, and a non-aqueous solvent like a mixture of EC and DMC. Then the assembly soaked with the electrolyte is crimped and sealed into a suitable battery container.

In addition, the present application also relates to the use of the battery, preferably a lithium ion battery or the use of at least one electrochemical cell in electronic devices, electric vehicles, or grid storage applications, among others.

### EXAMPLES

The invention is further illustrated by the following examples, but is not limited to these examples.

### Example 1: Manufacturing of a negative electrode comprising the composition according to the invention

An aqueous slurry of a negative electrode material was made by first mixing the an electrochemically active material consisting of silicon (60% by weight) combined with carbon black (15% by weight), graphite (10% by weight) as conducting additive with lignosulfonate (10% by weight; LS1671 from Borregaard) and CMC (5% by weight; Sigma Aldrich). Prior to use, CMC was dissolved in an aqueous solution containing KOH and citric acid, at pH 3. The negative electrode is fabricated by casting the slurry of the negative electrode material onto a copper foil as current collector and dried. Noting the electrode weight and area loading, the specific theoretical capacity on an area basis is calculated based on the assumed theoretical silicon capacity of 3.58 Ah/g for lithiated silicon. The amount given in % by weight is based on the total negative electrode material.

### Example 2: Manufacturing of a negative electrode comprising CMC only (Comparative Example)

The method described in Example 1 is repeated with the sole difference that instead of 10%by weight of lignosulfonate and 5% by weight of carboxymethyl cellulose, only 15% by weight carboxymethyl cellulose are used.

### Example 3: Manufacturing of a battery comprising the composition according to the invention

For the preparation of a half-cell battery, stainless steel CR2032 components were assembled in a glove box with the negative electrode of Example 1, a lithium metal foil as positive electrode along with an non-aqueous electrolyte and a porous separator (Celgard Corp.). The electrolyte used is supplied by BASF Corp. And is called G1. G1 is composed of 1:1:3 ethylene carbonate (EC) / propylene carbonate (PC) /dimethyl carbonate (DMC) with 1 weight % vinylene carbonate (VC) and 5 weight % fluoroethylene carbonate (FEC). The cap was closed over the case, and the cell was sealed in a crimping machine after preparation.

### Example 4: Manufacturing of a battery comprising CMC only (Comparative Example)

For the preparation of half-cell batteries, stainless steel CR2032 components were assembled in a glove box with the negative electrode of Example 2, a lithium metal foil as positive electrode along with an non-aqueous electrolyte and a porous separator (Celgard Corp.). The electrolyte used is supplied by BASF Corp. And is called G1. G1 is composed of 1:1:3 ethylene carbonate (EC) / propylene carbonate (PC) /dimethyl carbonate (DMC) with 1 weight % vinylene carbonate (VC) and 5 weight % fluoroethylene carbonate (FEC). The cap was closed over the case, and the cell was sealed in a crimping machine after preparation.

### Example 5: Testing of the electrochemical cells of Examples 3 and 4

Electrochemical testing was conducted by running charge and discharge cycling at different cycling rates to determine capacities of the electrochemical cells. Cell testing was three cycles at the C/20 discharge rate followed by life testing at C/10 discharge. Based on the weight of electrochemically active material present in the negative electrode, the specific discharge capacity (mAh/g) is determined.

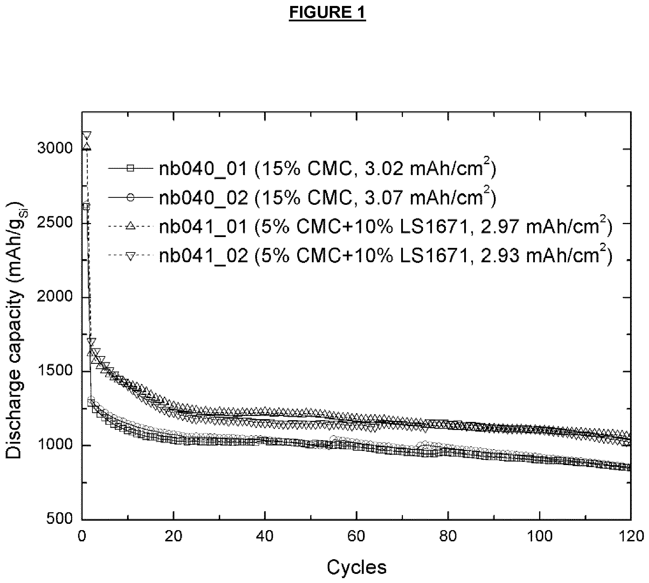

Figure 1 shows the results of cycle life testing at a nominal C/2 rate where the benefit of a composition of the invention consisting of 5% CMC and 10% lignosulfonate is demonstrated over a composition comprising 15% CMC alone. The benefit of employing a combination of lignosulfonate and CMC is approximately 25% higher specific capacity over CMC alone. (Electrode theoretical area capacities based on active material weight loadings are noted in the legend.)

## Claims

1. Composition for an electrochemical cell, in particular for a negative electrode of an electrochemical cell, said composition comprising at least one water soluble lignin and said composition further comprising carboxymethyl cellulose.

2. Composition as claimed in claim 1, wherein the water soluble lignin is a sulfonated lignin, a carboxylated lignin, a hydrolysed carboxylated lignin, or an amine functionalized lignin, preferably a sulfonated lignin or a lignosulfonate.

3. Composition as claimed in at least one of the preceding claims, wherein the composition comprises at least one further component selected from at least one water soluble polymer or at least one water dispersible polymer, or a mixture thereof.

4. Composition as claimed in claim 3, wherein the at least one further component is selected from phenolic resins, polyimide resins, amino resins, polyacrylic acid resins, polyacrylate resins, polyethylene glycol resins, sodium alginate, sodium pectate, or a mixture thereof.

5. Negative electrode for an electrochemical cell comprising a negative electrode material, wherein the negative electrode material comprises at least one electrochemically active material, said negative electrode further comprising the composition according to at least one of the preceding claims.

6. Negative electrode according to claim 5, wherein (i) at least 0.1% by weight, or at least 1% by weight, or at least 2% by weight, or at least 3% by weight, or at least 4% by weight, or at least 5% by weight and at most 10% by weight, or at most 12% by weight, or at most 15% by weight, or at most 17% by weight, or at most 20% by weight of carboxymethyl cellulose is present in the negative electrode material, wherein the % by weight is based on the total weight of the negative electrode material, and (ii) at least 0.1% by weight, or at least 1% by weight, or at least 2% by weight, or at least 3% by weight, or at least 4% by weight, or at least 5% by weight and at most 10% by weight, or at most 12% by weight, or at most 15% by weight, or at most 17% by weight, or at most 20% by weight of water soluble lignin is present in the negative electrode material, wherein the % by weight is based on the total weight of the negative electrode material.

7. Negative electrode according to claim 5 or 6, wherein the electrochemically active material of the electrode is selected from silicon or a silicon-carbon composite either separately or combined with other negative active materials such as lithium titanate or other forms of electrochemically active carbon, or aluminium, tin, antimony, magnesium, as well as mixtures of one or more of these compounds, also in the form of composites with carbon.

8. Negative electrode according to at least one of the claims 5 to 7, wherein the electrode material further comprises at least one conductive agent.

9. Method for producing a negative electrode for an electrochemical cell, comprising the step of mixing the composition according to at least one of the claims 1 to 4 with at least one electrode active material.

10. Electrochemical cell comprising the negative electrode according to at least one of the claims 5 to 8.

11. Battery, preferably lithium ion battery, comprising at least one electrochemical cell, preferably a plurality of electrochemical cells according to claim 10.

12. Use of the composition according to at least one of the claims 1 to 4 as binder in the negative electrode of an electrochemical cell.

13. Use of the composition according to at least one of the claims 1 to 4 as dispersant used during the manufacturing of an electrochemical cell, in particular during the manufacturing of the negative electrode of a lithium ion battery.
